Europäisches Patentamt

European Patent Office

Office européen des brevets

(19)

(11) Publication number: **0 074 214**
**B1**

(12) # EUROPEAN PATENT SPECIFICATION

(45) Date of publication of patent specification: **06.11.85**

(51) Int. Cl.⁴: **C 21 C 5/52, F 27 D 13/00**

(21) Application number: **82304463.1**

(22) Date of filing: **24.08.82**

(54) **Scrap preheating system for electric furnace.**

(30) Priority: **31.08.81 JP 137194/81**
**08.01.82 JP 2127/82**

(43) Date of publication of application:
**16.03.83 Bulletin 83/11**

(45) Publication of the grant of the patent:
**06.11.85 Bulletin 85/45**

(84) Designated Contracting States:
**DE FR GB IT**

(56) References cited:
**DE-A-3 121 860**
**FR-A-1 589 630**
**GB-A-1 115 762**
**US-A-4 280 836**

(73) Proprietor: **Kawasaki Jukogyo Kabushiki Kaisha**
**1-1 Higashikawasaki-cho 3-chome**
**Chuo-ku Kobe-shi Hyogo-ken (JP)**

(73) Proprietor: **GODO SEITETSU KABUSHIKI KAISHA**
**2-3-24 Umeda Kita-ku**
**Osaka 530 (JP)**

(72) Inventor: **Okuno, Ryuzo**
**6-24 Asahigaoka 3 Chome**
**Tarumi-ku Kobe (JP)**
Inventor: **Sarai, Masahiro**
**9-2 Momoyamadai 1 Chome**
**Tarumi-ku Kobe (JP)**
Inventor: **Toyoda, Keio**
**55 Higashiasagirioka**
**Akashi (JP)**
Inventor: **Takai, Kiyoshi**
**403 Shato Nishinomiya**
**16-8 Takagihihashi-machi Nishinomiya (JP)**

(74) Representative: **Hayward, Denis Edward Peter et al**
**Lloyd Wise, Tregear & Co. Norman House**
**105-109 Strand**
**London WC2R 0AE (GB)**

Courier Press, Leamington Spa, England.

EP 0 074 214 B1

## Description

This invention relates to a system for preheating scrap metal before it is processed in an electric furnace, employing the hot exhaust gas from the furnace.

Conventional scrap preheating apparatus of this type releases objectionable exhaust gas into the air. This gas contains malodorous and noxious vapours of organic substances such as oils, paints and rubber that are mixed with the scrap. Because this gas is a source of environmental pollution, some apparatus of this character has been prohibited.

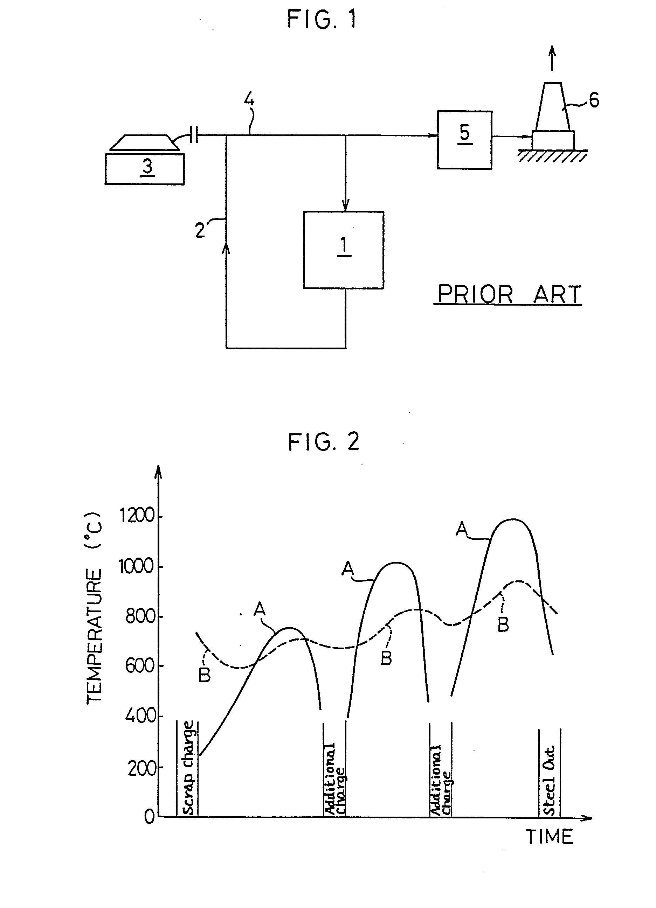

Fig. 1 shows a prior art preheating system that attempts to overcome the above pollution problem, wherein the objectionable gas from a scrap preheater 1 is fed back through a duct 2 to a high temperature duct 4 at the exhaust outlet of an electric furnace 3. Thus, the gas is burned and thereby cleansed before being passed through a dust remover 5 and a chimney 6 to be released into the air.

However, the temperature of the exhaust gas from the furnace 3 varies greatly as shown by the curves A in Fig. 2, as air enters the furnace each time the furnace is charged with preheated scrap. If the furnace gas is too hot, scrap in the preheater will fuse and the preheating basket(s) will be deformed; on the other hand, if the gas is too cool, the scrap will not be sufficiently heated in the preheater. If the exhaust gas immediately leaving the furnace has a temperature which is too low to burn objectionable components of the gas from the preheater, these components will not be burned, the gas will not be cleansed and the bad fumes will be released into the air.

In addition, dust contained in the exhaust gas from the furnace will stick to the scrap in the preheater, and some of this dust will enter the furnace together with the scrap, thereby lowering the quality of the steel. Some of the dust on the scrap will also spread within the furnace area when the furnace is charged with the scrap, thus necessitating the use of dust collectors.

It is an object of this invention to provide a scrap preheating system for use with an electric furnace which enables the temperature of the exhaust gas from the furnace, which normally varies greatly, and the cooler gas from the preheater, to be maintained substantially constant at a temperature which is high enough to burn the objectionable components of the gas, in order to remove objectionable components of the gas from the preheated scrap, without necessitating the use of additional fuel.

In accordance with this invention, apparatus is provided in a system for preheating scrap utilizing the exhaust gas from an electric furnace, said apparatus comprising a first gas line connected to the furnace for passing the exhaust gas from the furnace to a chimney and thence into the air, a branch provided in said first line for diverting a portion of the gas, and a second gas line for recirculating said diverted portion of the gas through a scrap preheater back to said first line at a junction between said furnace and said branch, said apparatus further including a first combustion chamber connected in said first line between the junction of said first and second gas lines and said branch in which combustion chamber some unburned components of the gas burn, and a heat-storing combustion unit connected in said first line between said first combustion chamber and the chimney, either upstream or downstream of said branch, said heat-storing combustion unit serving to burn remaining objectionable components of the gas by maintaining an approximately constant combustion temperature therein, absorbing heat when the temperature of the gas entering it is higher than said temperature and giving out heat when the entering gas temperature is lower.

The system may comprise a heat exchanger connected in said first gas line downstream of said branch and said heat-storing combustion unit, said second gas line being arranged to pass the gas from the scrap preheater through said heat exchanger before it is fed back to said first line.

A temperature-responsive flow controller may be provided that is responsive to the temperature in the first gas line between said junction with the second gas line and the outlet of the heat-storing combustion unit, said flow controller controlling the flow rate of the gas being recirculated through the second gas line in accordance with changes in the temperature sensed in the first gas line.

The heat-storing combustion unit may contain a plurality of heat-accumulating bodies to store and give out heat, and a preheater with a fuel burner may be provided in said first gas line upstream of the heat-accumulating bodies in said heat-storing combustion unit.

The invention further provides a method of removing objectionable gas components from a system wherein scrap metal is preheated utilising exhaust gas from an electric furnace, comprising the steps of:

1. conducting exhaust gas from the furnace through a duct to a chimney;

2. diverting a portion of the gas from the duct through a scrap preheater;

3. returning the diverted gas from the scrap preheater to the duct at a junction which is adjacent the furnace exhaust gas outlet; and

4. passing at least the undiverted portion of the gas in the duct through a heat-storing combustion unit wherein gas temperature variations are substantially equalised and the gas temperature is maintained at a level which is higher than the temperature required to burn the objectionable gas components.

Preferred ambodiments of this invention are described in detail below, by way of example, with reference to the accompanying drawings wherein:

Fig. 1 is a block diagram of a prior art scrap preheating system utilizing exhaust gas from an electric furnace;

Fig. 2 is a chart illustrating variations in the temperature of the gas exhausted from an electric furnace and the gas in a heat-storing combustion unit employed in accordance with this invention;

Fig. 3 is a block diagram of a system in accordance with a first embodiment of the invention;

Fig. 4 is a sectional view of a heat-storing combustion unit of the system shown in Fig. 3.

Figs. 5—8 are block diagrams similar to Fig. 3 showing second to fifth embodiments, respectively;

Fig. 9 is a chart showing the relationships between the temperatures of the gas and the quantity of recirculated gas;

Figs. 10 and 11 are block diagrams similar to Fig. 3 showing sixth and seventh embodiments, respectively;

Fig. 12 is a side view partially in longitudinal section showing another form of heat-storing combustion unit;

Fig. 13 is an enlarged fragmentary view of this heat-storing combustion unit taken on the line 13—13 of Fig. 12;

Fig. 14 is a sectional view on the line 14—14 of Fig. 12;

Fig. 15 is a sectional view similar to Fig. 14, but showing a modified construction;

Fig. 16 is an enlarged fragmentary view in longitudinal section showing an arrangement of a plurality of heat-accumulating bodies of the heat-storing combustion unit; and

Fig. 17 is a view similar to Fig. 12, but showing a further alternative form of heat-storing combustion unit.

The equivalent parts of the various embodiments are given the same reference numerals to avoid the need for repeating the explanation.

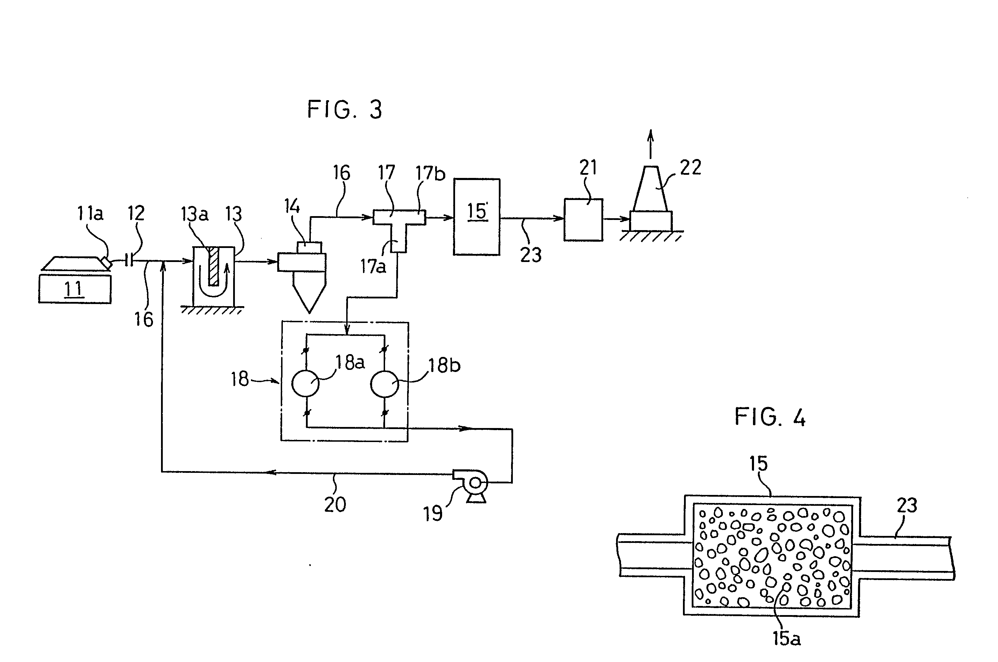

With reference first to Fig. 3, an electric furnace 11 for refining scrap has an outlet or gas vent 11a for exhausting gas. A high temperature gas duct or line 16 extends from the outlet 11a through a gap adjusting ring 12, a combustion tower 13 and a high temperature dust remover 14, to the inlet of a branching duct 17, all of which are connected in series.

Connected to one outlet branch 17a of the branching duct 17 is a scrap preheater 18 having two or more scrap baskets 18a and 18b disposed in parallel or in series with each other. Switching valves for the gas are connected at opposite sides of each basket. A gas return line 20 extends from the outlet of the preheater 18 through a flow inducing fan 19 and back to the exhaust duct 16, between the furnace outlet 11a and tower 13, for example, between the ring 12 and the tower 13, as illustrated, or to the tower 13.

Connected to the other branch 17b of branching duct 17 is a gas line 23 which extends through a heat-storing combustion unit 15 (better shown in Fig. 4), a dust remover 21 and a chimney 22.

The ring 12 interconnects the outlet 11a and the line 16, and varies the gap between the ducts at its opposite sides to mix a desired amount of air with the exhaust gas leaving the furnace, in order to control the combustion of the components of the gas which have not been burned and the gas temperature.

The combustion tower 13 may be a dust remover of the gravity settling type, which lowers the flow rate of the gas, deflects the gas flow by a partition 13a to remove dust by its mass or gravity, and burns the unburned furnace exhaust gases by reason of the heat possessed by the gas and the lowered gas flow rate.

The hot dust remover 14, which may be omitted from the system, may be a cyclone-type for removing dust which is not removed in the combustion tower 13.

As shown in Fig. 4, the heat-storing combustion unit 15 comprises a housing loaded with heat accumulating bodies 15a, such as pieces of steel and bricks, for heat exchange with the gas passing therethrough.

The heat-storing combustion unit 15 is provided to substantially smooth out or equalize the temperature of the gas exiting from it, as shown by curve B in Fig. 2, even though the temperature of the exhaust gas from the furnace 11 varies considerably due to charging of the furnace with scrap at predetermined time intervals. The heat accumulating bodies 15a absorb heat when the gas is at temperature peaks, and they release heat when the gas is at temperature valleys, thereby substantially evening out the gas temperature. This enables the temperature of the gas passing through the heat-storing combustion unit 15 to always be kept sufficiently high to burn the objectionable components. A temperature of at least 600°C is desired in order to eliminate the objectionable components of the gas. Without the unit 15, the temperature periodically falls below the 600°C level as shown by the valleys between the temperature peaks of curve A. The heat-storing combustion unit 15 smooths out the temperature variations and maintains the gas temperature in it above this level even though the temperature of the gas leaving the furnace varies greatly. Since the temperature in the unit is maintained above 600°C, the objectionable components of the gas will be burned in the unit 15.

In operation, the valves are opened at both ends of a basket 18a which is charged with scrap, and the valves of the other basket 18b are closed. The basket 18b may at that time either discharge preheated scrap, be charged with new scrap, or be on standby.

While the electric furnace 11 is working, the hot exhaust gas passes through the gap adjusting ring 12 to the combustion tower 13, where substances in the gas which have not been burned are burned, and the coarse dust is removed. After the fine dust is removed in the hot dust remover 14, the gas enters the branching duct 17.

A portion of the gas then passes from the duct branch 17a to the preheater basket 18a in order to preheat the scrap to a desired temperature. After heat exchange with the scrap, the gas will have a temperature in the order of, for example, 100°—200°C, and consequently it will contain objectionable components and have a bad odour due to the evaporation of organic substances contained in the scrap. The malodorous gas is recirculated by the fan 19 through the duct 20 to the hot gas duct 16, and mixed with the hot exhaust gas from the furnace.

The gas from the duct branch 17b passes to the heat-storing combustion unit 15 for heat exchange with the heat accumulating bodies 15a therein to raise or lower the temperature of the gas. In the heat-storing combustion unit 15, the objectionable substances in the gas which have not been burned now burn, because the gas temperature is brought to or maintained at the level needed to burn these components, and consequently these objectionable components are removed as the gas flows through the unit 15. After further dust is removed in the dust remover 21, the cleaned gas is released from the chimney 22 into the air. Thus, bad smelling and toxic gas components produced by preheating the scrap are removed and not released into the air.

Also, dust which would otherwise stick to the scrap is removed in the combustion tower 13 and in the hot dust remover 14 in order to reduce the amount of dust entering the scrap preheater 18. This prevents dust from spreading around when the furnace 11 is charged with preheated scrap, and it also improves the steel quality.

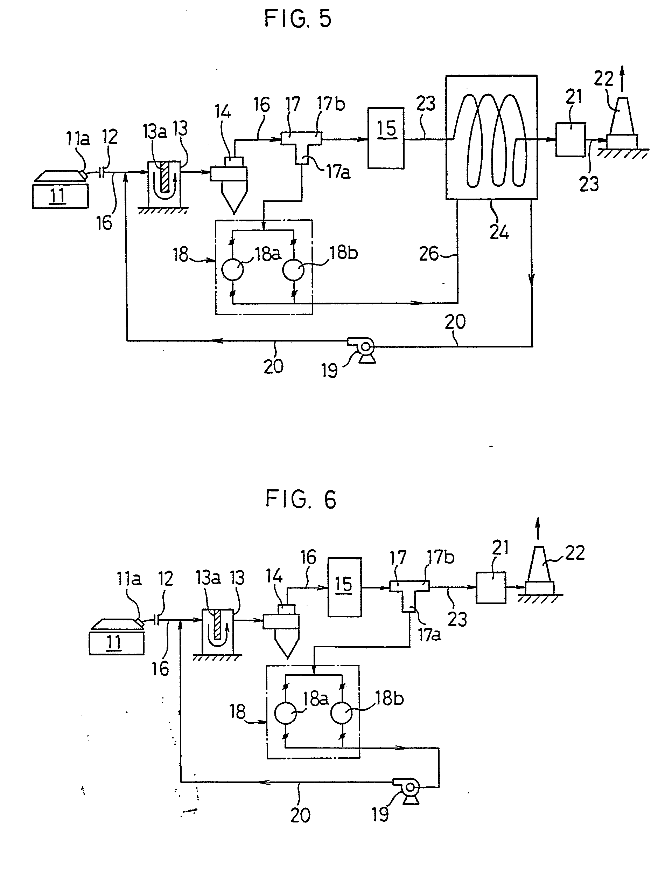

Fig. 5 shows a second embodiment, which can effectively utilize a greater amount of the heat possessed by the hot exhaust gas from the electric furnace. In the line 23 between the heat-storing combustion unit 15 and the dust remover 21 there is provided a heat exchanger 24, in which the outgoing gas is in heat exchange with the malodorous gas from the preheater 18 which enters through a line 26. As a result, the temperature of the malodorous gas leaving the scrap is raised by the waste heat of the gas from the heat-storing combustion unit 15, which heat would otherwise be released into the air. The heated malodorous gas is then recirculated through the line 20 to the hot gas line 16. This promotes the combustion in the tower 13 of the substances which have not been burned, and increases the amount of heat in the gases entering the preheater 18 and the unit 15.

The heat exchanger 24 should preferably be of the indirect or multi-tubular type, but could also be a regenerative type heat exchanger.

Fig. 6 shows a third embodiment having the arrangement of Fig. 3, but with the heat-storing combustion unit 15 located in the line 16 between the hot dust remover 14 and the branching duct 17, rather than after the duct 17 as shown in Fig. 3. If the exhaust gas from the electric furnace 11 is too hot, this arrangement enables the gas to be cooled to a temperature suitable to preheat scrap so as to prevent the scrap from fusing. If the gas is too cool, suitably heated gas can nevertheless be supplied to the scrap preheater 18.

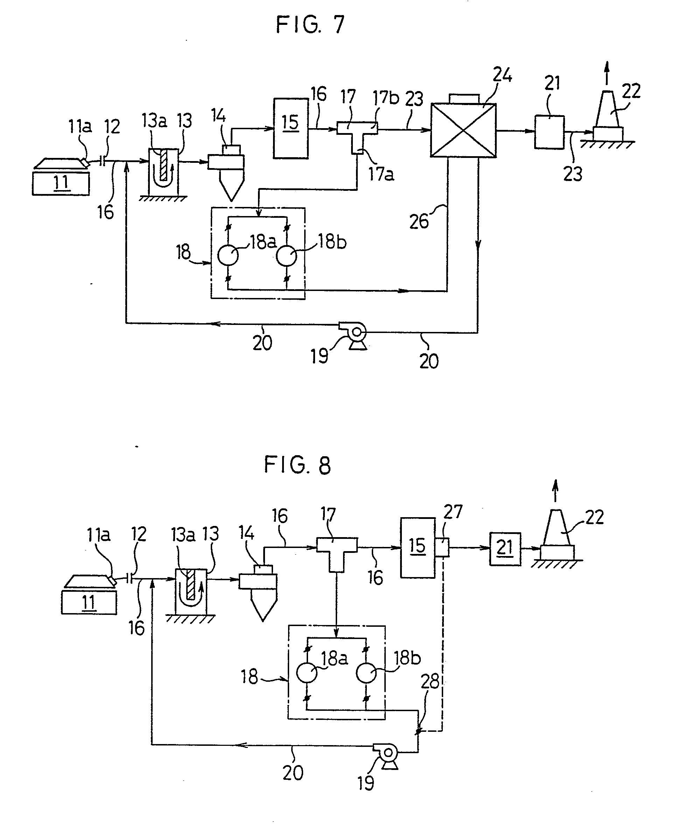

Fig. 7 shows a fourth embodiment having, in addition to the components shown in Fig. 6, the heat exchanger 24 provided in the line 23 between the duct branch 17b and the dust remover 21, similar to the arrangement of the heat exchanger 24 shown in Fig. 5.

Fig. 8 shows a fifth embodiment having, in addition to the arrangement of Fig. 3, a temperature detector 27 provided, for example, at the outlet of the heat-storing combustion unit 15, and a valve or damper 28 provided in the return line 20, for example, between the outlet of the scrap preheater 18 and the fan 19. The damper 28 is controlled by the temperature detector 27 to control the rate of flow of the gas being recirculated.

This control varies the rate of gas flow through the preheater 18, in response to temperature variation of the gas at the outlet of the unit 15 away from the predetermined value at or above which the objectionable components of the gas are burned. When the exhaust gas from the furnace 11 is too hot, the quantity of recirculated gas is increased to cool the hot gas, thereby preventing the scrap in the preheater 18 from fusing and the baskets from deforming. When the exhaust gas is too cool, the quantity of the recirculated gas is reduced to keep the gas temperature at the unit 15 high enough to burn the objectionable components.

Instead of the damper 28, means may be provided for changing the speed of the fan 19 to control the rate of gas flow through the return line 20. The temperature detector 27 may be situated at other locations in the hot gas duct 16, between its junction with the return duct 20 and the outlet of the heat-storing combustion unit 15, to detect the temperature of the gas or the heat accumulating bodies 15a.

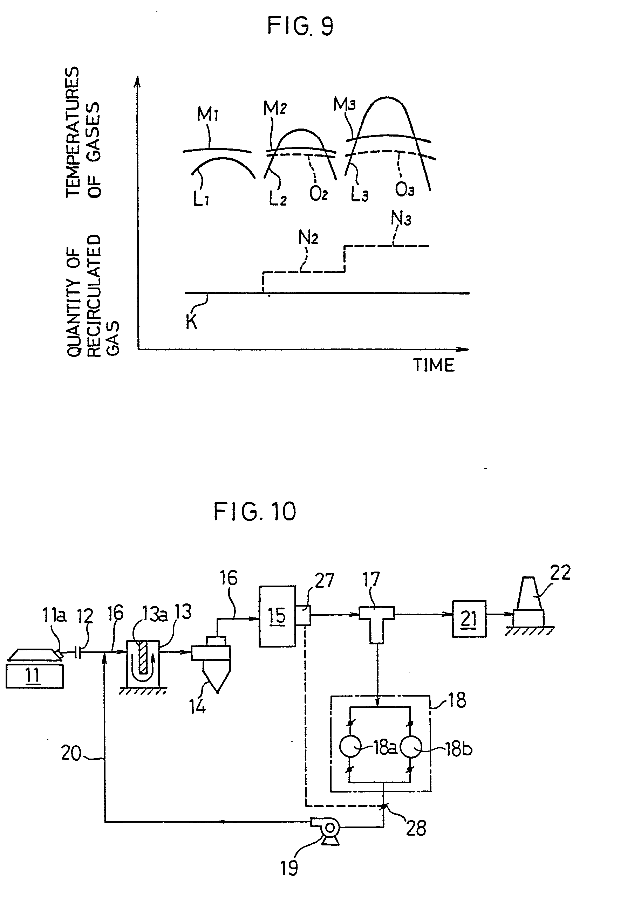

The temperature range within which the gas can be cleaned in the heat-storing combustion unit 15 depends on its objectionable components. Experiments have shown that a temperature of at least 600°C is necessary to deodorize the gas from the scrap of the sort processed by an electric furnace, and that a higher temperature speeds up the burning of the objectionable components. Consequently, the control 27 should be preset so that, when the temperature of the gas at the outlet of the unit 15 exceeds, for example, 650°C, the damper 28 is opened wider to increase the quantity of hot gas flowing into the preheater 18, giving the scrap more heat. The increased quantity of gas cooled in the preheater 18 returns to the duct 16 to be mixed with the hot furnace gas and then re-enters the unit 15. When the temperature at the heat-storing combustion unit outlet drops below 650°C, the damper is closed somewhat. This restriction of the flow continues until the temperature is approximately restored to the predetermined value, as graphically shown in Fig. 9.

If the rate of gas flow through the preheater 18 were constant as shown by the line K, the temperature of the exhaust gas from the furnace 11 would intermittently change and become high as shown by the curves L1, L2, L3, raising the temperature of the heat-storing combustion unit 15 as shown by the curves M1, M2, M3. Now, if the flow rate in the return duct 20 were raised as shown by lines N2 and N3, the temperature of the gas at the outlet of the unit 15 would reduce as shown by the lines O2 and O3.

Thus, the temperature variation of the mixed gas is reduced in amplitude to thereby preheat the scrap always to a suitable temperature, while still ensuring the burning of the objectionable components in the gas from the preheated scrap.

Fig. 10 shows a sixth embodiment which is similar to the arrangement of Fig. 8, but wherein the branching duct 17 is located between the heat-storing combustion unit 15 and the dust remover 21, similar to the Fig. 6 embodiment. This allows the temperature of the gas to be adjusted substantially to a predetermined value before it is supplied to the scrap preheater 18.

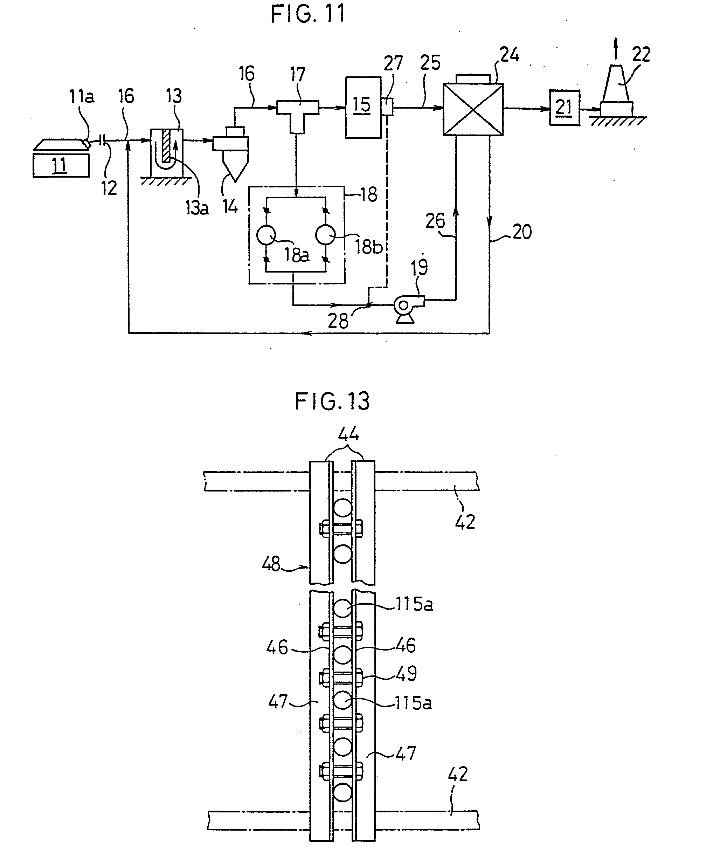

Fig. 11 shows a seventh embodiment having the components of Fig. 5 and additionally, a temperature detector 27 provided in the outlet of the heat-storing combustion unit 15, and a damper 28 controlled thereby provided in the gas line 26 between the scrap preheater 18 and the heat exchanger 24. The damper 28 is controlled by the detector 27 to regulate the gas recirculation through the preheater 18 and the heat exchanger 24 to the hot gas duct 16.

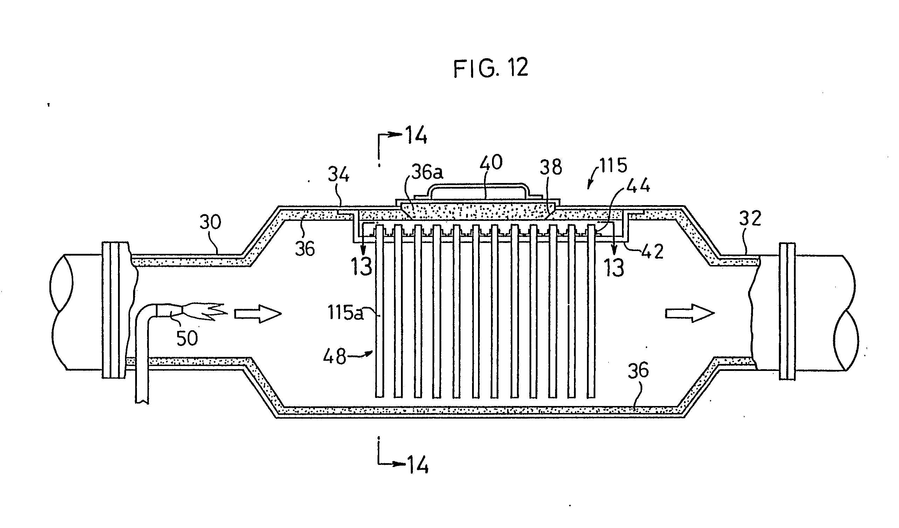

Fig. 12 shows a specific form of regenerative heat exchanger 115 that can be used as the heat-storing combustion unit 15. The unit 115 has a gas inlet 30 connected to the duct leading from the duct branch 17b, and an outlet 32 connected to the duct leading to the dust remover 21. It has a shell 34 lined with refractory material 36, to function as a regenerative furnace.

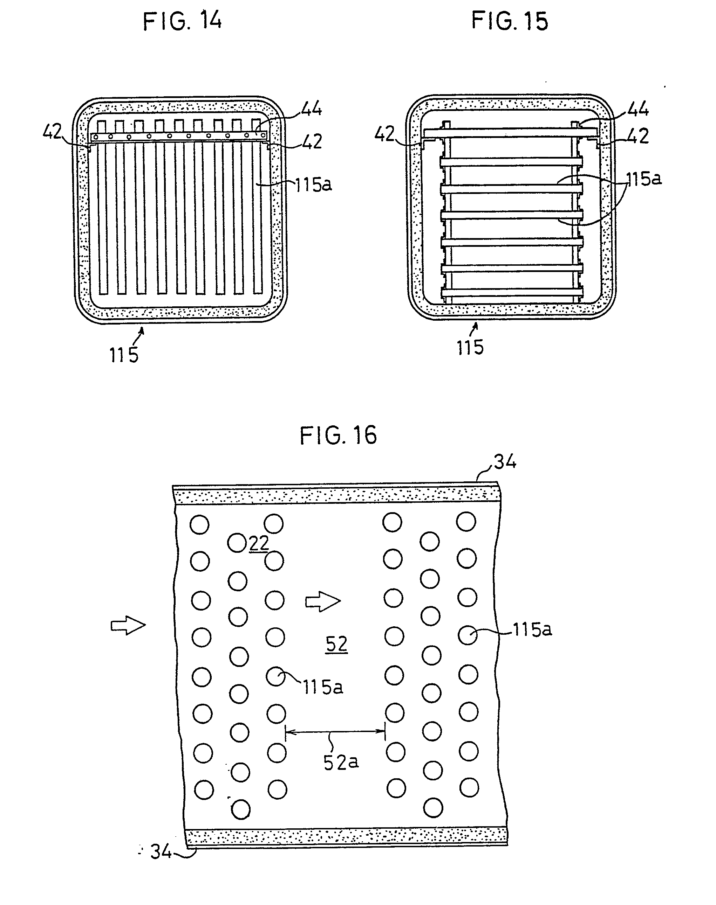

The body of the unit 115 is formed with a top opening 38 that extends through the shell 34 and the liner 36, and which is normally closed in gas-tight fashion by a lid 40 that is also lined with refractory material 36a. Fixed to the inside of the shell are a pair of laterally spaced supports 42 (see also Figs. 13 and 14) which extend longitudinally of the unit 115 parallel to each other and just below the opening 38.

As shown in Figs. 13 and 14, the supports 42 support both ends of pairs of horizontal removable spaced steel angles 44 which extend perpendicularly to the supports 42. Each pair of angles has one pair of flanges 47 in a horizontal plane and resting on the supports 42, while the other pair of flanges 46 face each other in vertical planes.

Each pair of angles 44 supports between the vertical flanges 46 the upper ends of a number of vertical steel bars 115a that form heat-accumulating bodies, the bars 115a extending vertically at horizontally-spaced intervals. The bars 115a and the angles 44 thereby form an individual unit 48, and the complete bundle of bars 115a is provided by mounting a succession of units 48 at intervals along the supports 42, so that there are bars in parallel relation to each other spaced both transversely and longitudinally of the shell 34. The bars 115a may be secured to the angles 44 by bolts and nuts 49 (Fig. 13) through the vertical flanges 46, or by welding to the flanges 46.

Each unit 48 comprising the angle members 44 and the bars 115a can be removed from the interior of the shell 34 through the opening 38 when the lid 40 is removed, for replacement.

Alternatively, as shown in Fig. 15, the bars 115a may be arranged to extend horizontally in a vertically spaced ladder configuration. The horizontal bars 115a are supported at their ends by vertical supports, and the upper ends of these supports are secured to the angles 44. It is also possible to combine the two types of heat-accumulating units shown in Figs. 14 and 15, e.g., by alternating them in the direction of the gas flow.

The heat-accumulating bodies 115a may be any form of long, deformed or flat bar steel, shaped section steel or other rolled steel, or pipe steel, which can effectively absorb a large amount of heat energy from the exhaust gas and later release it.

Round bars 115a having a smooth surface minimise the amount of dust that adheres thereto, and are preferable when the exhaust gas contains a large amount of dust. Round bars having a rough surface, deformed bars and shaped steel are effective in promoting heat transfer, and are suitable when the gas contains a smaller amount of dust.

When removed for replacement, the bodies 115a in the form of bar steel can be washed in water to remove the dust adhering thereto, and may be used as scrap steel with which to charge the electric furnace 11.

As shown in Fig. 12, the inlet 30 of the unit 115 may serve as a preheater provided with a burner 50 therein, the nozzle of which is directed in the direction of gas flow, to preheat the unit 115 and the gas upstream of the steel bars 115a to a temperature that is high enough to burn the objectionable components when the unit 115 is not yet hot enough to operate normally, e.g., just after the furnace 11 is started up.

As shown in Fig. 16, the steel bars 115a may be divided into two or more bundles with a space 52 therebetween, which provides a gas path greater in cross-section than that through the bundles. The gas flow speed is therefore lower in the space 52. By varying the length 52a of the space 52 in the direction of gas flow, the time for the gas to pass through the unit 115 can be changed in order to provide for adequate combustion.

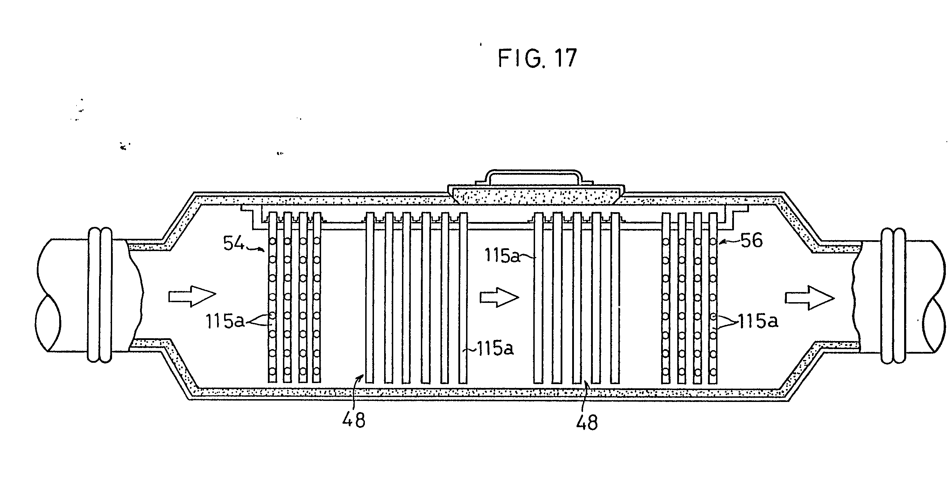

Fig. 17 shows a modification of the heat-storing combustion unit 115 which includes additional heat-accumulating units 54 provided at least upstream of the units 48, with optional further units 56 downstream of the units 48. Each additional unit 54, 56 includes steel bars 115a arranged in crossed or latticed form and defining a large number of small gas paths. Alternatively, the additional heat-accumulating units may be formed of refractory bricks. These additional units 54 and 56 not only serve as heat accumulators, but also rectify the gas flow so that it is distributed over the whole area of the units 48, thereby improving the heat exchange efficiency.

The heat-storing combustion unit 115 may be provided with a cleaning hopper (not shown) at the bottom of the shell 34 below the heat accumulators 115a, or at the bottom of inlet 30, to permit removal of accumulated dust.

The top opening 38 may instead be formed in the side wall of the shell 34 of the unit 115, and the units 48, 54, 56 may be adapted to slide laterally on the supports for insertion and removal through this opening.

## Claims

1. Apparatus in a system for preheating scrap utilizing exhaust gas from an electric furnace, the apparatus comprising a first gas line (16) connected to the furnace (11) for passing the exhaust gas from the furnace to a chimney (22) and thence into the air, a branch (17a) provided in said first line for diverting a portion of the gas, and a second gas line (20) for recirculating said diverted portion of the gas through a scrap preheater (18) back to said first line at a junction between said furnace and said branch, said apparatus further including a first combustion chamber (13) connected in said first gas line between the junction of said first and second gas lines and said branch in which combustion chamber some unburned components of the gas burn, and a heat-storing combustion unit (15, 115) connected in said first line between said first combustion chamber and the chimney, said heat-storing combustion unit serving to burn remaining objectionable components of the gas by maintaining an approximately constant combustion temperature therein, absorbing heat when the temperature of the gas entering it is higher than said temperature and giving out heat when the entering gas temperature is lower.

2. Apparatus as claimed in Claim 1, further comprising a heat exchanger (24) connected in said first gas line downstream of said branch and said heat-storing combustion unit, said second gas line being arranged to pass the gas from the scrap preheater through said heat exchanger for heat exchange with the outgoing gas.

3. Apparatus as claimed in Claim 1 or Claim 2, further comprising a temperature-responsive flow controller (27, 28) responsive to the temperature in the first gas line between said junction with the second gas line and the outlet of the heat-storing combustion unit, said flow controller controlling the flow rate of the gas being recirculated through the second gas line in accordance with changes in the temperature sensed in the first gas line.

4. Apparatus as claimed in Claim 1 or Claim 2 or Claim 3, wherein the heat-storing combustion unit is downstream of said branch.

5. Apparatus as claimed in Claim 1 or Claim 2 or Claim 3, wherein the heat-storing combustion unit is upstream of said branch.

6. Apparatus as claimed in any preceding Claim, further comprising a dust remover (14) connected in said first gas line between said first combustion chamber and said branch.

7. Apparatus as claimed in any preceding Claim, wherein said heat-storing combustion unit (115) comprises a shell (34) formed with an opening (38) therein, a lid (40) for closing said opening, and a plurality of heat-accumulating bodies (115a) contained within said shell and removable therefrom through said opening.

8. Apparatus as claimed in Claim 7 further comprising a preheater with a fuel burner (50) provided in said first gas line upstream of the heat-accumulating bodies in the heat-storing combustion unit.

9. A method of removing objectionable gas components from a system wherein scrap metal is preheated utilizing exhaust gas from an electric furnace, comprising the steps of:

1. conducting exhaust gas from the furnace through a duct to a chimney;

2. diverting a portion of the gas from the duct through a preheater;

3. returning the diverted gas from the scrap preheater to the duct at a junction which is adjacent the furnace exhaust gas outlet; and

4. passing at least the undiverted portion of the gas in the duct through a heat-storing combustion unit wherein gas temperature variations are substantially equalised and the gas temperature is maintained at a level which is higher than the temperature required to burn the objectionable gas components.

## Patentansprüche

1. Vorrichtung zur Anwendung in einem System zum Vorerhitzen von Schrott unter Verwendung des Abgases eines elektrischen Ofens, wobei das System eine erste Gasleitung umfaßt, die mit dem Ofen verbunden ist, um relativ heißes und staubiges Abgas vom Ofen zu einem Kamin und dann in die Luft zu leiten, weiterhin Verzweigungselemente umfaßt, die in dieser ersten Leitung eingebaut sind, um einen Teilstrom des Gases abzuleiten, der in diese Verzweigungselemente einströmt, weiter einen Schrottvorerhitzer end eine zweite Gasleitung umfaßt, die mit den Verzweigungselementen der ersten Leitung und dem Vorerhitzer verbunden sind, um die Gasteilmenge durch den Schrottvorerhitzer und einem Verbindungspunkt zwischen dem Ofen und den Verzweigungselementen zu der ersten Leitung zu führen, wobei die Vorrichtung Verbrennungsvorrichtungen, die in der ersten Leitung zwischen dem Verbindungspunkt und den Verzweigungselementen zur Verbrennung der übelriechenden Gaskomponenten angeordnet sind, und einen Regenerator aufweist, der in der ersten Leitung zwischen den Verbrennungsvorrichtungen und dem Kamin angeordnet ist.

2. Vorrichtung nach Anspruch 1 und ferner aufweisend: einen Wärmetauscher, der in der ersten Leitung stromabwärts von den Verzweigungselementen und dem Regenerator eingefügt ist, und Vorrichtungen in der zweiten Leitung, um das Gas vom Vorerhitzer durch den Wärmetauscher und dann zum Verbindungsstück zu leiten.

3. Vorrichtung nach Anspruch 1 oder 2 und ferner aufweisend: auf Temperatur ansprechende Vorrichtungen, die mit der ersten Leitung stromabwärts vom Regenerator verbunden sind, und Vorrichtungen, die in der zweiten Leitung angeordnet sind und von den auf Temperatur ansprechenden Vorrichtungen gesteuert werden, um die durch die zweite Leitung rückgeführte Gasmenge zu regeln.

4. Vorrichtung nach Anspruch 1, wobei der Regenerator stromabwärts von den Verzweigungselementen liegt.

5. Vorrichtung nach Anspruch 1, wobei der Regenerator stromaufwärts von den Verzweigungselementen liegt.

6. Vorrichtung nach Anspruch 1 und ferner einen Staubentferner aufweisend, der in der ersten Leitung zwischen den Verbrennungsvorrichtungen und den Verzweigungselementen angeordnet ist.

7. Vorrichtung nach Anspruch 1, wobei der Regenerator aufweist: ein Gehäuse, das eine Öffnung, eine Klappe zum Verschleißen der Öffnung und eine Viehlzahl von wärmespeichernden Elementen aufweist, die in diesem Gehäuse enthalten sind und von dort durch die Öffnung entfernbar sind.

8. Vorrichtung nach Anspruch 1 oder 2 und ferner aufweisend: einen Vorerhitzungsbrenner, der in der ersten Leitung zwischen der Verbindung, an der das vorwärtige Ende der zweiten Leitung mit der ersten Leitung verbunden ist, und dem Regenerator angeordnet ist.

9. Eine Methode, unerwünschte Gase aus einem System zu entfernen, in welchem Schrottmetall vorgeheizt wird, wobei Abgas eines elektrischen Ofens benuzt wird, die folgende Schritte umfaßt:

1. Leiten von Abgas vom Ofen durch eine Leitung;

2. Umleiten eines Teils des Gases von der Leitung durch einen Schrottvorerhitzer;

3. Rückführen des umgeleiteten Gases zu der Leitung an einem Verbindungspunkt, der nahe am Ofenabgasauslaß liegt; und

4. Vergleichmäßigen der Gastemperaturunterschiede in der Leitung stromabwärts von dem Verbindungspunkt und die Gastemeratur auf einen Betrag haltend, der höher ist als die Temperatur, die zum Verbrennen der Gase nötig ist.

**Revendications**

1. Appareil destiné à être utilisé dans une installation de préchauffage de déchets, utilisant du gaz s'échappant d'un four électrique, le système comprenant une première canalisation de gaz reliée au four, permettant à du gaz d'échappement relativement chaud et poussièreux de passer du four à une cheminée, puis dans l'air, un ambranchement monté dans ladite première canalisation destiné à détourner une partie du gaz pénétrant dans ledit embranchement, un préchauffeur de déchets, et une seconde canalisation de gaz reliée à l'embranchement, à la première canalisation et au préchauffeur, destinée à faire repasser ladite partie du gaz par le préchauffeur de déchets et vers ladite première canalisation, au niveau d'un raccordement entre le four et l'embranchement, ledit appareil comprenant des moyens de combustion montés dans la première canalisation entre ledit raccordement et l'embranchement, destinés à brûler des composants malodorants du gaz, et un régénérateur monté dans la première canalisation entre les moyens de combustion et la cheminée.

2. Appareil selon la revendication 1, comprenant en outre un échangeur de chaleur monté dans la première canalisation en aval de l'embranchement et du régénérateur, et des moyens placés dans la seconde canalisation pour diriger le gaz provenant du préchauffeur à travers l'échangeur de chaleur, puis vers le raccordement.

3. Appareil selon la revendication 1 ou 2, et comprenant en outre des moyens thermosensibles reliés à la première canalisation en aval du régénérateur, et des moyens placés dans la seconde canalisation et actionnés par lesdits moyens thermosensibles, pour règler la quantité de gaz repassant par la seconde canalisation.

4. Appareil selon la revendication 1, dans lequel le régénérateur se trouve en aval de l'embranchement.

5. Appareil selon la revendication 1, dans lequel le régénérateur se trouve en amont de l'embranchement.

6. Appareil selon la revendication 1, comportant en outre un dépoussièreur monté dans la première canalisation entre les moyens de combustion et l'embranchement.

7. Appareil selon la revendication 1, dans lequel le régénérateur comprend un boîtier pourvu d'une ouverture, un couvercle destiné à fermer ladite ouverture, et une pluralité d'éléments d'accumulation de chaleur contenus dans le boîtier et pouvant en être retirés par ladite ouverture.

8. Appareil selon la revendication 1 ou 2, comprenant en outre un brûleur de préchauffage situé dans la première canalisation entre le raccordement où l'extrémité antérieure de ladite seconde canalisation et au régénérateur.

9. Procédé pour éliminer des gaz gênants d'une installation où l'on préchauffe des déchets métalliques en utilisant du gaz s'échappant d'un four électrique, comportant les étapes suivantes:

1. on fait passer le gaz d'échappement provenant du four par une conduite;

2. on détourne une portion du gaz provenant de la conduite en la faisant passer par un préchauffeur de déchets;

3. on renvoie le gaz détourné dans la conduite au niveau d'un raccordement adjacent à la sortie des gaz d'échappement du four; et

4. on compense les variations de température du gaz dans la conduite en aval dudit raccordement, et l'on maintient la température du gaz à un niveau supérieur à la température nécessaire pour brûler les gaz gênants.

FIG. 1

PRIOR ART

FIG. 2

FIG. 3

FIG. 4

FIG. 5

FIG. 6

3

## FIG. 7

## FIG. 8

## FIG. 9

## FIG. 10

## FIG. 11

## FIG. 13

FIG. 12

FIG. 14

FIG. 15

FIG. 16

## FIG. 17

54 115a 56

115a 115a

115a 115a

48 48

0 074 214